# EUROPÄISCHE PATENTSCHRIFT

(11) **EP 1 214 226 B1**
(45) Veröffentlichungstag und Bekanntmachung des Hinweises auf die Patenterteilung: **25.02.2004**
(21) Anmeldenummer: 00958407.9
(22) Anmeldetag: 09.08.2000
(51) Int. Cl.: B60R 21/16

(54) **AUFPRALL-SCHUTZVORRICHTUNG**
IMPACT PROTECTION DEVICE
DISPOSITIF DE PROTECTION CONTRE LES COLLISIONS

(30) Priorität: 08.09.1999 DE 19942886
(43) Veröffentlichungstag der Anmeldung: 19.06.2002
(73) Patentinhaber: Volkswagen Aktiengesellschaft, 38436 Wolfsburg (DE)
(72) Erfinder: BREYVOGEL, Jörg, 38165 Lehre (DE); FEHRMANN, Hans, 38446 Wolfsburg (DE)
(74) Vertreter: Liebl, Thomas, Dipl.-Ing.
(86) Internationale Anmeldenummer: PCT/EP2000/007744
(87) Internationale Veröffentlichungsnummer: WO 2001/017827

(56) Entgegenhaltungen:
- DE-U- 9 405 143
- DE-U- 29 713 111
- US-A- 4 169 613
- US-A- 5 765 863
- PATENT ABSTRACTS OF JAPAN vol. 1998, no. 12, 31. Oktober 1998 (1998-10-31) & JP 10 181498 A (KANSEI CORP), 7. Juli 1998 (1998-07-07) & US 6 142 507 A (KANSEI KK) 11. Juli 2000 (2000-07-11)

## Beschreibung

Die Erfindung betrifft eine Aufprall-Schutzvorrichtung für Fahrzeuginsassen, mit einem Gassack, der einen Abschnitt und einen seitlichen Abschnitt umfasst, und der mit einem Gasgenerator in Verbindung steht, so dass ein von dem Gasgenerator erzeugtes Gas in den Gassack strömen kann.

Eine solche Schutzvorrichtung dient dazu, bei einem Aufprall eines Fahrzeugs einen Kontakt der Fahrzeuginsassen mit Teilen des Fahrzeugs zu verhindern. Zu diesem Zweck werden die auch als Airbags bezeichneten Aufprall-Schutzvorrichtungen bevorzugt in Rahmenteilen des Fahrzeugs angeordnet. Hierbei besteht das Problem, einen Kontakt der Fahrzeuginsassen mit Teilen des Fahrzeugs auch in Bereichen zu verhindern, in denen eine Anordnung der Aufprall-Schutzvorrichtung aus Konstruktionsgründen nicht möglich ist. Hierzu zählt beispielsweise der Bereich der Fenster. Problematisch ist die Anordnung der Aufprall-Schutzvorrichtung insbesondere auch in einem B-Säulenbereich eines Fahrzeugs mit einer Schiebetür, vor allem aufgrund der dort angeordneten Schiebetürhalterung und - führung.

Aus der DE 295 17 372 ist eine Gassack-Seitenaufprall-Schutzeinrichtung bekannt, die sich beim Aufblasen in einen Raum seitlich der Fahrzeugtür entfaltet. Hierbei ist mit Hilfe des seitlichen Ausblasens des Gases über den Toraxschutz hinaus ein Gassack im Kopfbereich ausgebildet. Ein ähnlicher Aufbau ist auch aus der JP 10181498-A bekannt.

Aus der US 4,169,613 ist eine Insassenschutzvorrichtung mit einem zwei Kammern aufweisenden Airbag bekannt, wobei eine erste Airbagkammer von der Armaturentafel ausgehend entlang der Windschutzscheibe in Richtung zum Fahrzeuginsassen vor diesem aufblasbar ist. Erst wenn diese Kammer aufgeblasen ist, wird Gas in eine zweite Airbagkammer eingeblasen, die sich von der oberen Airbagkammer ausgehend nach unten zwischen dem Fahrer und dem Lenkrad erstreckt.

Aus der DE 297 13 111 U1 ist eine Airbaganordnung bekannt, bei der ein zweikammriger Airbag vorgesehen ist, wobei die beiden Airbagkammem durch eine Trennwand voneinander getrennt sind. Die zweite Airbagkammer wird verzögert zur ersten Airbagkammer aufgeblasen. Dazu sind Haltemittel im Airbag vorgesehen, die beim Erreichen eines bestimmten Gasinnendrucks in der zweiten Airbagkammer reissen und diese für eine Expansion freigeben.

Aus der DE 94 05 143.7 U1 ist eine Airbagvorrichtung mit einem Airbag bekannt, der im aufgeblasenen Zustand aus einem Airbagseitenteil und einem im Winkel dazu angeordneten Airbagfrontteil besteht.

Aus der gattungsgemäßen US-A-5,765,863 ist eine Aufprall-Schutzvorrichtung für Fahrzeuginsassen mit einem Gassack bekannt, der einen Abschnitt und einen seitlichen Abschnitt umfasst und der mit einem Gasgenerator in Verbindung steht, so dass ein vom Gasgenerator erzeugtes Gas in den Gassack strömen kann.

Konkret ist hier ein Seitenairbag-Modul vorgesehen, das einen Airbag mit zwei Kammern umfasst, wobei das Gas zuerst in eine untere, dem Oberbereich zugeordnete Kammer eingeblasen wird. Dieses Gasvolumen kann dann beim Aufprall eines Insassen auf die untere Kammer in die obere, dem Kopfbereich eines Fahrzeuginsassen zugeordnete Kammer gedrückt werden. Für einen derartigen Aufbau ist eine spezielle Faltungstechnik erforderlich, bei dem bestimmte Eck- oder Kantenbereiche durch Verdrehen taschenartig von äußen zwischen zwei gegenüberliegende Seitenwände des entsprechend gefalteten Restairbags eingesteckt werden. Eine derartige Faltung ist relativ aufwendig und nur mit einiger Mühe herzustellen, wobei zudem die Gefahr besteht, dass aufgrund dieser komplizierten Faltungstechnik der Gassack nicht in der gewünschten Weise im Bedarfsfall aufgeblasen wird, d. h. das die Gefahr besteht, dass die Funtionssicherheit beim Aufblasvorgang nicht in der erwünschten Weise gegeben ist.

Aufgabe der Erfindung ist daher, eine Aufprall-Schutzvorrichtung zuschaffen, deren Gassack durch eine einfache Faltungstechnik in einen gefalteten Nicht-Gebrauchszustand überführt werden kann und die mit hoher Funktionssicherheit aus dem zusammengefalteten Nicht-Gebrauchszustand heraus in eine Gebrauchstellung überführbar ist.

Diese Aufgabe wird gelöst mit den Merkmalen des Patentanspruchs 1.

Gemäß Anspruch 1 ist der Gassack zu dessen Überführung in den nicht aktivierten, zusammengefalteten Grundzustand vom entfalteten nicht aufgeblasenen Zustand ausgehend, in dem die beiden Abschnitte in einer Entfaltungebene in Längsrichtung gesehen nebeneinanderliegen,
- in der Entfaltungsebene quer zur Längsrichtung zusammenfaltbar, und
- der zusammengefaltete seitliche Abschnitt um eine im Übergangbereich zwischen dem Abschnitt und dem seitlichen Abschnitt liegende Klappachse auf den zusammengefalteten Abschnitt klappbar;
wobei der seitliche Abschnitt bei einem Aufblasen des Gassacks mittels des vom Gasgenerator erzeugten Gases eine Klappbewegung von dem Abschnitt weg derart ausführt, dass ein wenigstens teilweise entfalteter Zustand des Gassacks ausgebildet ist.

Eine derartige Faltung kann auf einfache Weise hergestellt werden, wobei hier zudem sichergestellt ist, dass der Gassack insgesamt sehr funktionssicher aufgeblasen werden kann, da der seitliche Abschnitt hier für ein in Position bringen am gewünschten Aufblasbereich lediglich durch eine einfach Klappbewegung von dem seitlichen Abschnitt weggeklappt zu werden braucht.

Besonders vorteilhaft ist mit einem derartigen Aufbau im aktivierten Zustand des Airbags ein Seitenaufprallschutz im Bereich der B-Säule eines Fahrzeugs mit Schiebetür möglich, auch wenn dort, insbesondere wegen der Schiebetürhalterung und -führung eine Anordnung der Aufprall-Schutzvorrichtung aus Konstruktionsgründen nicht möglich ist. Der Gassack kann dabei im zusammengefalteten Zustand z. B. im Bereich oberhalb des Seitenfensters angeordnet sein.

Ein weiterer Vorteil, welcher mit der Erfindung gegenüber dem Stand der Technik erreicht ist, besteht darin, daß mittels des zusammengeklappten Gassacks der Platzbedarf für den Einbau der Schutzvorrichtung in dem Kraftfahrzeug vermindert ist. Darüber hinaus gewährleistet der zusammengeklappte Gassack eine einfache Faltung des Gassacks, so daß eine kurze Aufblaszeit des Gassacks beim Entfalten gewährleistet ist, die für die Ausbildung eines wirksamen Aufprallschutzes notwendig ist.

Eine vorteilhafte Ausgestaltung der Erfindung sieht vor, daß der Gassack ziehharmonikaförmig aufgefaltet ist, wodurch einerseits eine platzsparende Anordnung des Gassacks möglich ist. Andererseits ist die problemlose Entfaltung des Gassacks weiter verbessert.

Bei einer Weiterbildung der Erfindung kann vorgesehen sein, daß die Klappachse im wesentlichen parallel oder im wesentlichen quer zu einer Strömungsrichtung des aus dem Gasgenerator in den Gassack strömenden Gases ausgebildet ist. Hierdurch ist die Aufprall-Schutzvorrichtung an unterschiedliche Anforderungen in Kraftfahrzeugen anpaßbar. In Abhängigkeit davon, auf welcher Seite ein über den Bereich der Aufprall-Schutzvorrichtung hinausgehender, zusätzlicher Aufprallschutz ausgebildet werden muß, kann der Verlauf der Klappachse gewählt werden.

Bei einer zweckmäßigen Fortbildung der Erfindung kann die Klappbewegung um einen Winkel von wenigstens 90° ausgeführt werden, wodurch insbesondere der Schutz in einem Eckbereich des Innenraums des Kraftfahrzeugs gewährleistet werden kann.

Vorteilhaft kann die Klappbewegung um einen Winkel von etwa 180° ausgeführt werden, wodurch ein Aufprallschutz in Bereichen des Innenraums des Kraftfahrzeugs ausgebildet werden kann, in denen eine Anordnung einer Aufprall-Schutzvorrichtung nicht möglich ist. Hierzu gehören beispielsweise der Bereich der Fenster oder der B-Säulenbereich bei Fahrzeugen mit einer Schiebetür.

Bei einer vorteilhaften Ausgestaltung der Erfindung erstreckt sich die Klappachse entlang einer zwischen dem Abschnitt und dem seitlichen Abschnitt ausgebildeten Faltnaht, wodurch eine genaue Definition der Klappachse erleichtert ist.

Eine zweckmäßige Ausgestaltung der Erfindung sieht vor, daß in dem Abschnitt Strömungskanäle ausgebildet sind, die im entfalteten Zustand des Gassacks im wesentlichen parallel zur Strömungsrichtung des aus dem Gasgenerator in den Gassack strömenden Gases verlaufen. Hierdurch ist die Ausbreitungsrichtung des einströmenden Gases lenkbar, so daß eine fehlerfreie Klappbewegung des seitlichen Abschnitts von dem Abschnitt weg gewährleistet ist.

Bei einer Weiterbildung der Erfindung sind in dem seitlichen Abschnitt seitliche Strömungskanäle ausgebildet, die im entfalteten Zustand des Gassacks im wesentlichen quer zur Strömungsrichtung des aus dem Gasgenerator in den Gassack strömenden Gases verlaufen. Hierdurch ist eine schnelle Entfaltung des von dem Abschnitt weggeklappten seitlichen Abschnitts ermöglicht.

Vorteilhaft kann vorgesehen sein, daß der Abschnitt nahezu vollständig entfaltet werden kann, bevor eine Entfaltung des seitlichen Abschnitts beginnt, wodurch zunächst ein optimaler Aufprallschutz im Bereich des Abschnitts ausbildbar ist, bevor dieser Aufprallschutz mittels der Entfaltung des seitlichen Abschnitts ergänzt wird.

Bei einem Fahrzeug mit einer Schiebetür kann zweckmäßig vorgesehen sein, daß der Gassack in dem aufgefalteten Zustand so in einem Fahrzeuginnenraum angeordnet ist, daß in dem entfalteten Zustand des Gassacks mit Hilfe des seitlichen Abschnitts ein Seitenaufprallschutz im Bereich der Schiebetür ausgebildet ist. Hierdurch ist ein Aufprallschutz in einem Bereich ausgebildet, in dem eine Anordnung einer Aufprall-Schutzvorrichtung nicht möglich ist.

Die Erfindung wird im folgenden anhand eines Ausführungsbeispiels und unter Bezugnahme auf eine Zeichnung näher erläutert. Hierbei zeigen:
- Figur 1: eine Aufprall-Schutzvorrichtung im Entfaltungszustand in Vorderansicht;
- Figur 2: die Aufprall-Schutzvorrichtung in einem teilweise aufgefalteten Zustand in Vorderansicht, wobei eine Klappachse im wesentlichen quer zu einer Strömungsrichtung des in den Gassack strömenden Gases ausgebildet ist;
- Figur 3: die Aufprall-Schutzvorrichtung in einem teilweise aufgefalteten Zustand in Draufsicht, wobei die Klappachse im wesentlichen parallel zur Strömungsrichtung des in den Gassack strömenden Gases ausgebildet ist; und
- Figur 4: eine Aufprall-Schutzvorrichtung mit Strömungskanälen.

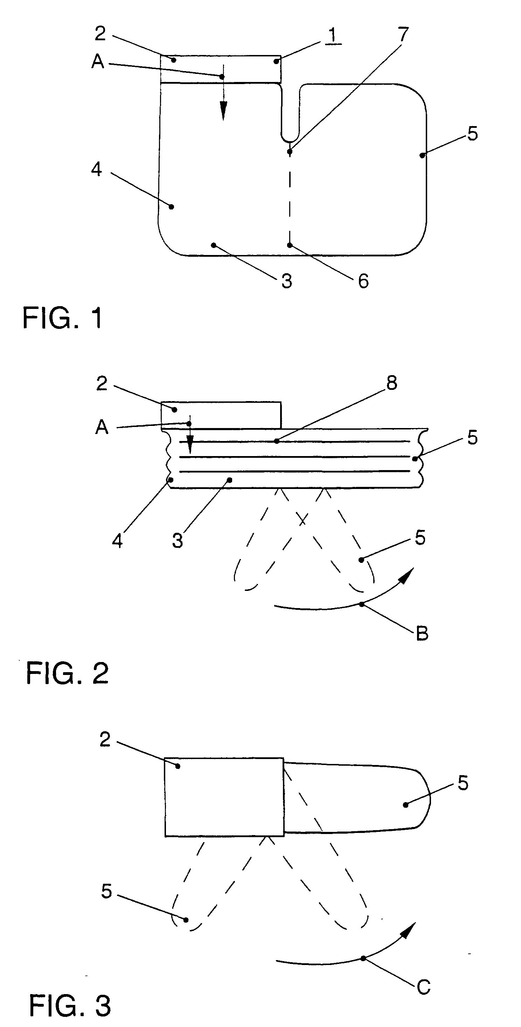

Gemäß Figur 1 weist eine Aufprall-Schutzvorrichtung 1 einen Gasgenerator 2 auf, mit dem Gas erzeugt werden kann, das in Richtung eines Pfeils A in einen Gassack 3 einströmt. Der Gassack 3 umfaßt einen Abschnitt 4, der direkt mit dem Gasgenerator 2 in Strömungsverbindung steht, und einen seitlichen Abschnitt 5, der mit dem Abschnitt 4 in Strömungsverbindung steht. Zwischen dem Abschnitt 4 und dem seitlichen Abschnitt 5 des Gassacks 3 ist eine Naht 6 ausgebildet, so daß im Bereich der Naht 6 ein Strömen des Gases aus dem Abschnitt 4 in den seitlichen Abschnitt 5 wenigstens in Teilabschnitten der Naht 6 verhindert ist. Zu diesem Zweck kann die Naht 6 in einzelne Abschnitte 7 unterteilt sein oder teilweise durchgehend ausgebildet sein.

Gemäß Figur 2 ist der Gassack ziehharmonikaförmig gefaltet, so daß sich Faltkanten 8 ergeben. In einem aufgefalteten Zustand des Gassacks 3 ist der seitliche Abschnitt 5 auf dem Abschnitt 4 angeordnet. Hierbei sind der Abschnitt 4 und der seitliche Abschnitt 5 ziehharmonikaförmig gefaltet. Strömt das von dem Gasgenerator 2 erzeugte Gas in den Gassack 3 so entfaltet sich zunächst der Abschnitt 4 wenigstens teilweise. Hierdurch wird eine Schleuderbewegung des seitlichen Abschnitts 5 ausgelöst. Der Abschnitt 5 klappt, wie in Figur 2 mittels eines Pfeils B dargestellt ist, um eine Klappachse von dem Abschnitt 4 weg. Die Klappbewegung des seitlichen Abschnitts 5 beschreibt hierbei vorzugsweise einen Winkel zwischen 90 und 180°. Vor Beginn der Klappbewegung ist der seitliche Abschnitt 5 nicht oder nur teilweise entfaltet.

Bei der Ausführungsform einer Aufprall-Schutzvorrichtung 1 nach Figur 2 verläuft die Klappachse im wesentlichen quer zur Strömungsrichtung A des von dem Gasgenerator 2 erzeugten Gases.

Figur 3 zeigt eine Aufprall-Schutzvorrichtung 1 in Draufsicht. Bei dieser Ausführungsform ist der seitliche Abschnitt 5 im aufgefalteten Zustand des Gassacks 3 benachbart zum Abschnitt 4 so angeordnet, daß die Klappbewegung des seitlichen Abschnitts 5 beim Entfalten des Gassacks 3 um eine Klappachse erfolgt, die im wesentlichen parallel zur Strömungsrichtung des von dem Gasgenerator 2 erzeugten Gases ausgebildet ist. Bei der Klappbewegung in Richtung eines Pfeiles C steht die Klappachse in Figur 3 im wesentlichen senkrecht auf der Zeichenebene. Auch bei dieser Ausführungsform erfolgt die Klappbewegung vorzugsweise um einen Winkel zwischen 90° und 180°.

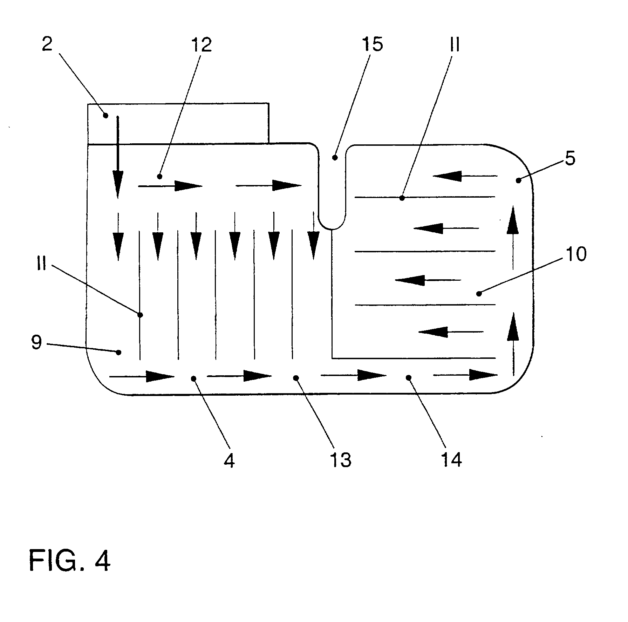

Gemäß Figur 4 können in dem Abschnitt 4 Strömungskanäle 9 und in dem seitlichen Abschnitt 5 seitliche Strömungskanäle 10 ausgebildet sein. Die Strömungskanäle 9 und die seitlichen Strömungskanäle 10 sind jeweils mit Hilfe von Trennlinien 11 gebildet. Zur Ausbildung der Trennlinien 11 werden Seitenflächen des Gassacks 3 entlang der Trennlinien 11 miteinander verklebt oder mit Hilfe von abzudichtenden Nähten miteinander verbunden.

Mit Hilfe der Strömungskanäle 9 wird das aus dem Gasgenerator 2 in den Gassack 3 strömende Gas aus einem Bereich 12, der zu dem Gasgenerator 2 benachbart ist, in einen Bereich 13 auf der gegenüberliegenden Seite des Abschnitts 4 des Gassacks 3 geleitet. Hierdurch ist einerseits gewährleistet, daß sich beim Entfalten des Gassacks 3 zunächst der Abschnitt 4 im wesentlichen vollständig entfaltet, bevor der seitliche Abschnitt 5 die Klappbewegung von dem Abschnitt 4 weg ausführt. Andererseits unterstützt der Verlauf der Strömungskanäle 9 gemäß Figur 4 die Erzeugung eines ausreichenden Impulses zur Auslösung der Klappbewegung.

Das Gas strömt anschließend durch einen Kanal 14 in den seitlichen Abschnitt 5 und wird dort mit Hilfe der seitlichen Strömungskanäle 10 so geleitet, daß sich der seitliche Abschnitt 5 vollständig entfaltet.

Zwischen dem Abschnitt 4 und dem seitlichen Abschnitt 5 ist eine Einbuchtung 15 derart ausgebildet, daß die Klappbewegung des seitlichen Abschnitts 5 von dem Abschnitt 4 weg unterstützt ist.

### BEZUGSZEICHENLISTE

- 1: Aufprall-Schutzvorrichtung
- 2: Gasgenerator
- 3: Gassack
- 4: Abschnitt
- 5: seitlicher Abschnitt
- 6: Naht
- 7: einzelne Abschnitte der Naht 6
- 8: Faltkanten
- 9: Strömungskanal
- 10: seitlicher Strömungskanal
- 11: Trennlinie
- 12: zum Gasgenerator 2 benachbarter Bereich des Gassacks 3
- 13: Bereich auf der gegenüberliegenden Seite des Gassacks 3
- 14: Kanal
- 15: Einbuchtung

## Patentansprüche

1. Aufprall-Schutzvorrichtung für Fahrzeuginsassen, mit einem Gassack (3), der einen Abschnitt (4) und einen seitlichen Abschnitt (5) umfasst, und der mit einem Gasgenerator (2) in Verbindung steht, so daß ein von dem Gasgenerator (2) erzeugtes Gas in den Gassack (3) strömen kann,
**dadurch gekennzeichnet,**
**dass** der Gassack (3) zu dessen Überführung in den nicht aktivierten, zusammengefalteten Grundzustand vom entfalteten und nicht aufgeblasenen Zustand ausgehend, in dem die beiden Abschnitte (4, 5) in einer Entfaltungsebene in Längsrichtung gesehen nebeneinander liegen,
- in der Entfaltungsebene quer zur Längssrichtung zusammenfaltbar ist, und
- der zusammengefaltete seitliche Abschnitt (5) um eine im Übergangsbereich zwischen dem Abschnitt (4) und dem seitlichen Abschnitt (5) liegende Klappachse auf den zusammengefalteten Abschnitt (4) klappbar ist, und
**dass** der seitliche Abschnitt (5) bei einem Aufblasen des Gassacks (3) mittels des vom Gasgenerator (2) erzeugten Gases eine Klappbewegung von dem Abschnitt (4) weg derart ausführt, dass ein wenigstens teilweise entfalteter Zustand des Gassacks (3) ausgebildet ist.

2. Vorrichtung nach Anspruch 1, **dadurch gekennzeichnet, dass** der Gassack (3) ziehharmonikaförmig gefaltet ist.

3. Vorrichtung nach Anspruch 1 oder 2, **dadurch gekennzeichnet, dass** die Klappachse im wesentlichen parallel zu einer Strömungsrichtung (A) des aus dem Gasgenerator (2) in den Gassack (3) strömenden Gases ausgebildet ist.

4. Vorrichtung nach Anspruch 1 oder 2, **dadurch gekennzeichnet, dass** die Klappachse im wesentlichen quer zur Strömungsrichtung (A) des aus dem Gasgenerator (2) in den Gassack (3) strömenden Gases ausgebildet ist.

5. Vorrichtung nach einem der vorhergehenden Ansprüche, **dadurch gekennzeichnet, dass** die Klappbewegung um einen Winkel von wenigstens 90° ausgeführt werden kann.

6. Vorrichtung nach Anspruch 5, **dadurch gekennzeichnet, dass** die Klappbewegung um einen Winkel von etwa 180° ausgeführt werden kann.

7. Vorrichtung nach einem der vorhergehenden Ansprüche, **dadurch gekennzeichnet, dass** sich die Klappachse entlang einer zwischen dem Abschnitt (4) und dem seitlichen Abschnitt (5) ausgebildeten Faltnaht (6) erstreckt.

8. Vorrichtung nach einem der vorhergehenden Ansprüche, **dadurch gekennzeichnet, dass** in dem Abschnitt (4) Strömungskanäle (9) ausgebildet sind, die im entfalteten Zustand des Gassacks (3) im wesentlichen parallel zur Strömungsrichtung (A) des aus dem Gasgenerator (2) in den Gassack (3) strömenden Gases verlaufen.

9. Vorrichtung nach einem der vorhergehenden Ansprüche, **dadurch gekennzeichnet, dass** in dem seitlichen Abschnitt (5) seitliche Strömungskanäle (9) ausgebildet sind, die im entfalteten Zustand des Gassacks (3) im wesentlichen quer zur Strömungsrichtung (A) des aus dem Gasgenerator (2) in den Gassack (3) strömenden Gases verlaufen.

10. Vorrichtung nach einem der vorhergehenden Ansprüche, **dadurch gekennzeichnet, dass** der Abschnitt (4) nahezu vollständig entfaltet werden kann, bevor eine Entfaltung des seitlichen Abschnitts (5) beginnt.

11. Vorrichtung nach einem der vorhergehenden Ansprüche, **dadurch gekennzeichnet, dass** der Gassack (3) in dem aufgefalteten Zustand so in einem Fahrzeuginnenraum angeordnet ist, daß in dem entfalteten Zustand des Gassacks (3) mit Hilfe des seitlichen Abschnitts (5) ein Seitenaufprallschutz im Bereich einer Schiebetür ausgebildet ist.

## Claims

1. Impact protection device for vehicle occupants, having a gas bag (3) which comprises a section (4) and a lateral section (5), and which is connected to a gas generator (2), so that a gas produced by the gas generator (2) can flow into the gas bag (3), **characterized in that** the gas bag (3), in order to transfer it into the non-activated, folded-up basic state starting from the unfolded and non-inflated state, in which the two sections (4, 5) lie next to each other in an unfolding plane, as seen in the longitudinal direction,
- can be folded up transversely with respect to the longitudinal direction in the unfolding plane, and
- the folded-up, lateral section (5) can be swivelled about a swivel axis, which is situated in the transition region between the section (4) and the lateral section (5), onto the folded-up section (4), and
**in that** when the gas bag (3) is inflated by means of the gas produced by the gas generator (2), the lateral section (5) executes a swivelling movement away from the section (4) in such a manner that an at least partially unfolded state of the gas bag (3) is formed.

2. Device according to Claim 1, **characterized in that** the gas bag (3) is folded in the form of a concertina.

3. Device according to Claim 1 or 2, **characterized in that** the swivel axis is formed essentially parallel to a direction of flow (A) of the gas flowing into the gas bag (3) from the gas generator (2).

4. Device according to Claim 1 or 2, **characterized in that** the swivel axis is formed essentially transversely with respect to the direction of flow (A) of the gas flowing into the gas bag (3) from the gas generator (2).

5. Device according to one of the preceding claims, **characterized in that** the swivelling movement can be executed about an angle of at least 90°.

6. Device according to Claim 5, **characterized in that** the swivelling movement can be executed about an angle of approximately 180°.

7. Device according to one of the preceding claims, **characterized in that** the swivel axis extends along a folding seam (6) formed between the section (4) and the lateral section (5).

8. Device according to one of the preceding claims, **characterized in that** flow channels (9) are formed in the section (4), said flow channels, in the unfolded state of the gas bag (3), running essentially parallel to the direction of flow (A) of the gas flowing into the gas bag (3) from the gas generator (2).

9. Device according to one of the preceding claims, **characterized in that** lateral flow channels (9) are formed in the lateral section (5), said flow channels, in the unfolded state of the gas bag (3), running essentially transversely with respect to the direction of flow (A) of the gas flowing into the gas bag (3) from the gas generator (2).

10. Device according to one of the preceding claims, **characterized in that** the section (4) can be virtually completely unfolded before unfolding of the lateral section (5) begins.

11. Device according to one of the preceding claims, **characterized in that** the gas bag (3) is arranged in the folded-together state in a vehicle interior in such a manner that, in the unfolded state of the gas bag (3), side impact protection is formed in the region of a sliding door with the aid of the lateral section (5).

## Revendications

1. Dispositif de protection contre les collisions pour les occupants d'un véhicule, avec un airbag (3), qui comprend une section (4) et une section latérale (5), et qui est en liaison avec un générateur de gaz (2) de telle sorte qu'un gaz produit par le générateur de gaz (2) puisse s'écouler dans l'airbag (3),
**caractérisé en ce que**
l'airbag (3), en partant de l'état déplié et non soufflé, dans lequel les deux sections (4,5) sont juxtaposées dans un plan de dépliage vu dans le sens longitudinal, vers le transfert dudit airbag dans l'état de base, replié dans son ensemble et non activé,
- est susceptible d'être replié dans son ensemble dans ledit plan de dépliage, transversalement par rapport audit sens longitudinal, et
- la section latérale (5) repliée est susceptible de basculer sur la section (4) repliée, autour d'un axe de basculement situé dans la zone de transition entre la section (4) et la section latérale (5), et
**en ce que** la section latérale (5) exécute, lors d'un gonflement par soufflage de l'airbag (3) au moyen du gaz produit par le générateur de gaz (2), un mouvement de basculement en s'éloignant de la section (4), de telle sorte qu'une conformation en un état au moins partiellement déplié de l'airbag (3) soit obtenue.

2. Dispositif selon la revendication 1, **caractérisé en ce que** l'airbag (3) est plié en accordéon.

3. Dispositif selon la revendication 1 ou 2, **caractérisé en ce que** l'axe de basculement se situe essentiellement selon une disposition parallèle au sens d'écoulement (A) du gaz depuis le générateur de gaz (2) jusque dans l'airbag (3).

4. Dispositif selon la revendication 1 ou 2, **caractérisé en ce que** l'axe de basculement se situe essentiellement selon une disposition transversale au sens d'écoulement (A) du gaz depuis le générateur de gaz (2) jusque dans l' airbag (3).

5. Dispositif selon l'une des revendications précédentes, **caractérisé en ce que** le mouvement de basculement peut être exécuté selon un angle d'au moins 90°.

6. Dispositif selon la revendication 5, **caractérisé en ce que** le mouvement de basculement peut être exécuté selon un angle de 180° environ.

7. Dispositif selon l'une des revendications précédentes, **caractérisé en ce que** l'axe de basculement s'étend le long d'une couture de pliage (6) conformée entre la section (4) et la section latérale (5).

8. Dispositif selon l'une des revendications précédentes, **caractérisé en ce que** dans la section (4) sont conformés des canaux de flux (9), qui, dans l'état déplié de l'airbag (3), s'étendent essentiellement de façon parallèle au sens d'écoulement (A) du gaz depuis le générateur de gaz (2) jusque dans l'airbag (3).

9. Dispositif selon l'une des revendications précédentes, **caractérisé en ce que** dans la section latérale (5) sont conformés des canaux de flux latéraux (9), qui, dans l'état déplié de l'airbag (3), s'étendent essentiellement de façon transversale au sens d'écoulement (A) du gaz depuis le générateur de gaz (2) jusque dans l'airbag (3).

10. Dispositif selon l'une des revendications précédentes, **caractérisé en ce que** la section (4) peut être pratiquement complètement dépliée, avant que tout dépliage de la section latérale (5) ne commence.

11. Dispositif selon l'une des revendications précédentes, **caractérisé en ce que** l'airbag (3), dans l'état plié, est disposé dans un espace intérieur de véhicule, de façon telle que dans l'état déplié de l'airbag (3) et à l'aide de la section latérale (5), une protection latérale contre les collisions soit ménagée dans la zone d'une portière coulissante.
